# EUROPÄISCHE PATENTANMELDUNG

(11) **EP 1 093 766 A1**
(43) Veröffentlichungstag der Anmeldung: **25.04.2001**
(21) Anmeldenummer: 99120744.0
(22) Anmeldetag: 20.10.1999
(51) Int. Cl.: A61C 8/00

(54) **Einschraubbares, selbstschneidendes Knochenimplantat zur Pfostenverankerung von zahnärztlichen Suprakonstruktionen**

(71) Anmelder: Abou Tara, Nicolas, Prof.Dr. Dr.med.dent., 21149 Hamburg (DE)
(72) Erfinder: Abou Tara, Nicolas, Prof.Dr. Dr.med.dent., 21149 Hamburg (DE)

(57) **Zusammenfassung**

Die Erfindung betrifft ein einschraubbares, selbstschneidendes Knochenimplantat (10) zur Pfostenverankerung von zahnärztlichen Suprakonstruktionen. Diese vorbekannten Implantatssysteme sind nachteilig hinsichtlich der Liegedauer im Kiefer, da sie aus verschiedenen Gründen aus dem Kiefer abgestossen werden. Die Erfindung schafft hier Abhilfe dadurch, daß das Knochenimplantat (10) aus einem zylindrischen Pfostenlager (12) mit einstückig angesetzem zylindrischen Kern (14) eines selbstschneidenden scharfgängigen zylindrischen Gewindes (16) besteht, dadurch gekennzeichnet, daß es aus reinem Titan (99,9%) besteht, welches zur Vergrößerung seiner Oberfläche eine Vielzahl mikroskopischer Dellen durch ausschließliche Bestrahlung mit Quarz, insbesondere hoher Geschwindigkeit aufweist, und daß mehrere spiralförmige aufsteigende Kanäle (18) oder Spankammern zur Aufnahme von Knochenpartikeln und Spänen um die Oberfläche des Kernes herum vorgesehen sind, und daß der Durchmesser des Pfostens (5) um 0,02-0.06 mm kleiner als der Durchmesser des Implantatshalses (19) ist, so daß im eingesetzten Gebrauchszustand die Krone (20) bündig mit dem Implantatshals (19) ist.

## Beschreibung

Die Erfindung betrifft ein einschraubbares, selbstschneidendes Knochenimplantat zur Pfostenverankerung von zahnärztlichen Suprakonstruktionen nach dem Oberbegriff des Anspruches 1.

Ein derartiges Implantat ist beispielsweise aus der EP-B-0 282 789 und den dort zitierten Entgegenhaltungen bekannt.

Diese vorbekannte Lehre ist insbesondere darin nachteilig, daß sie einen konischen Kern aufweist, dessen oberer Gewindeabschnitt stumpf ist und deshalb beim Eindrehen Gewebeschäden hervorruft.

Das Fachgebiet der Implantologie ist eines der zukunftsträchtigsten Gebiete der Zahnmedizin. Implantologie ist die beste und erfolgreichste Hilfe für einen festen Zahnersatz bei den Patienten geworden.

Weltweit wurden bis heute über 50 Implantatssyteme veröffentlicht, von denen sechs oder sieben einen besonderen Bekanntheitsgrad besitzen und vor allem medizinischen Erfolg garantieren.

Alle diese vorbekannten Systeme konnten jedoch ein Problem bislang nicht lösen: Was passiert mit den kleinen Knochenpartikeln und Spänen, die sich durch die Implantation während des Bohrens und des Reinschraubens des Implantates in den Kiefer vom Knochen lösen?

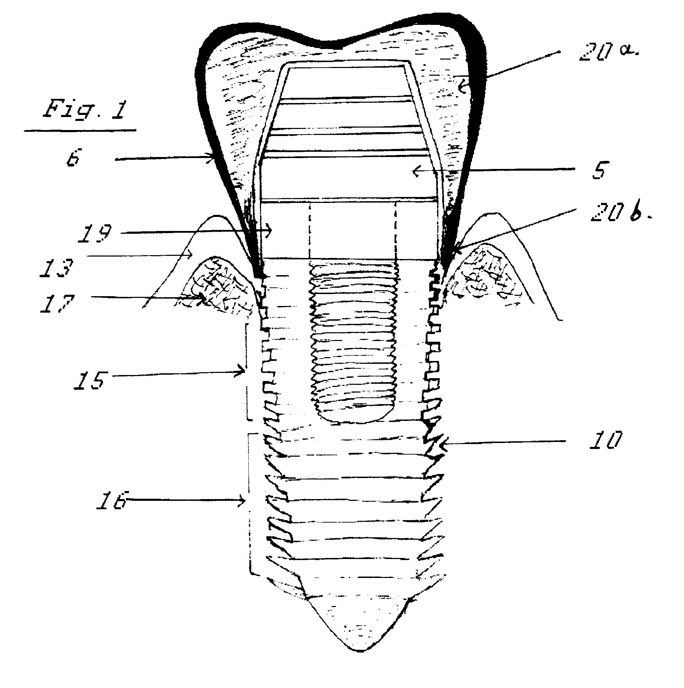

Auch das Zurückgehen der Gingiva (Zahnfleisch) vom Implantatshals rückwärts, was durch den tangential tragenden Kronenrand um den Implantatshals (Abb.1), bewirkt wird, ist als nachteilig anzusehen.

Alle Implantatssysteme, die sich derzeit auf dem Markt befinden, sind mit Plasmaspray oder mit Trikalciumphosphat bzw. Hydroxyl-Appatit beschichtet. Es ist bekannt, daß sich diese Beschichtungen von den Implantatskörpern ablösen oder resorbieren. Durch diese beiden Möglichkeiten wird das Abstossen des Implantates begünstigt bzw. verursacht.

Der Erfindung liegt deshalb die Aufgabe zurgrunde, das eingangs genannte Implantat derart zu verbessern, daß das Abstossen des Implantates und gleichzeitig das Zurückgehen der Gingiva möglichst weitgehend unterbunden wird.

Ein weiteres Ziel der Erfindung ist es, eine leichte und schnelle Implantation ohne Gewebeschäden hervorzurufen mit langer Liegedauer im Kiefer zu gewährleisten.

Diese Aufgabe und das Ziel werden durch das Implantat gemäß Anspruch 1 gelöst.

Reines Titan (99.9 %) wird vom menschlichen Körper am besten vertragen. Deshalb ist das erfindungsgemäße Implantat aus reinem Titan (99.9 %) hergestellt und wurde nur mit sehr hoher Geschwindigkeit mit Quarz bestrahlt.

Diese Quarzbestrahlung verursacht Tausende kleiner mikroskopischer Dellen im Implantatskörper, und führt auf diese Weise zur ca. sechsfachen Vergrößerung der Implantatsoberfläche. Und diese Vergrößerung wiederum führt zur besseren Ossiointegration zwischen Kieferknochen und Implantat. Somit besteht eine bessere primäre Stabilität des Implantats, die letztendlich zu einer langen Liegedauer des Implantates im Kieferbereich führt.

Für die meisten sich auf dem Markt befindlichen Implantate mußte man bisher das Implantatsbett in den Kiefer bohren, und mit Gewinde von innen im Knochen versehen, um das Implantat hinein drehen zu können. Einige dieser Implantate besitzen nur zu einem Teil scharfes Gewinde, das sich in den Knochen schneidet.

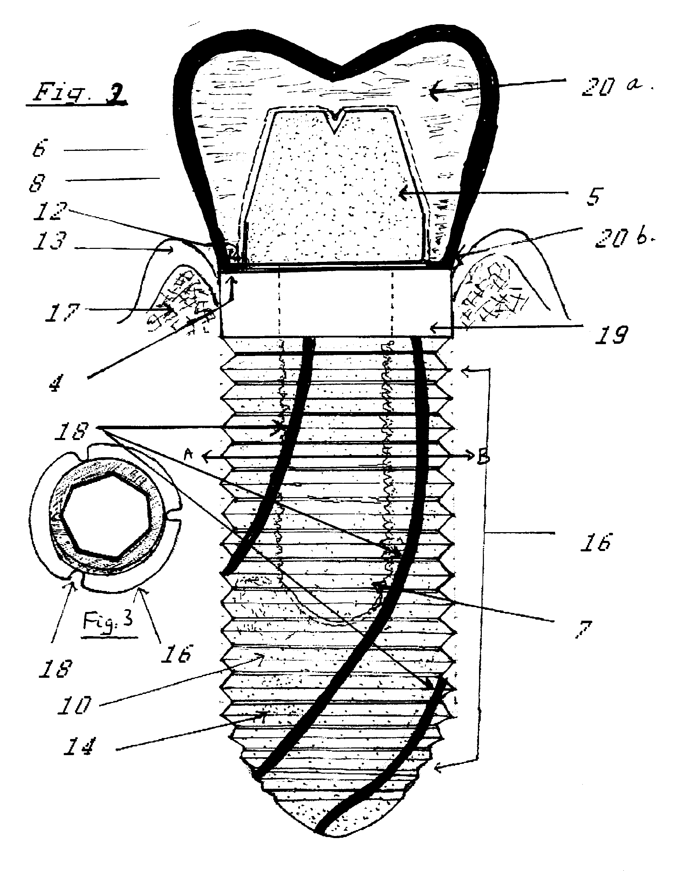

Das erfindungsgemäße Implantat hingegen besitzt auf seiner gesamten Länge scharfe Gewinde, die sich selbst in den Knochen schneiden, und somit eine primäre Stabilität garantieren. Das Problem bezüglich losgelöster Knochenpartikel und Späne wird durch drei lang laufende Kanäle in Spiralform, die die Knochenpartikel und Späne während des Hineindrehens des Implantates in den Kiefer in die obere Richtung des Implantatshalses führen (Richtung: Kieferoberfläche), gelöst. Anders gesagt: es handelt sich um Spankammern für den Knochenabrieb. Diese können dort nun abgesaugt werden, oder rund um den Implantatshals liegengelassen werden. Somit verursachen sie keinerlei Schäden. (Abb.2)

Das Problem bezüglich des Zahnfleisches (Gingiva) und dessen Zurückgehens vom Implantatshals wird entsprechend ebenfalls durch das erfindungsgemäße Implantat und seine angepaßten Pfosten gelöst.

Bei den meisten Implantatssystemen liegen die Kronenränder tangential um den Implantatshals oder auf der Pfostenbasis über der Gingiva. Bei der ersten Möglichkeit bildet sich das Zahnfleisch dadurch zurück, was bald zum Verlust des Implantats führen kann. Bei der zweiten Möglichkeit führt es durch den seitlichen Kaudruck zum Abbrechen der Pfostenschraube, die im Implantat die Pfosten zum Empfang der Supra-Struktur fixiert.

Beim erfindungsgemäßen Implantat ist der Durchmesser des Pfostens um etwa 0,02-0,06 mm, insbesondere 0.03 mm kleiner als der Durchmesser des Implantatshalses. Dieses kann als Rücksprung bezeichnet werden. Dies entspricht der Dicke des Kronenrandes. Dadurch kann die Krone bündig mit dem Implantatshals eingesetzt werden. Auf diese Weise wird das Zurückgehen des Zahnfleisches durch den Kaudruck und die Verletzung des tangential Kronenrandes vermieden, und der seitliche und senkrechte Kaudruck auf dem Implantatskörper getragen.

Alle nun genannten Aspekte und Vorteile des erfindungsgemäßen Implantates führen zur besseren Versorgung der Patienten mit Zahnersatz und Implantaten. Zusätzlich besteht eine wesentlich bessere Mundhygiene, und vor allem muß natürlich in diesem Zusammenhang auf die lange Liegedauer von den erfindungsgemäßen Implantaten hingewiesen werden.

Es zeigt:
- Fig. 1: eine Ansicht eines Implantates nach dem Stand der Technik, bei den die Gingiva weggebrochen dargestellt ist, die am unteren Kronenrand anliegt;
- Fig. 2: eine mit Fig. 1 vergleichbare Ansicht des erfindungsgemäßen Implantates mit Kanälen; und
- Fig. 3: einen Querschnitt durch das erfindungsgemäße Implantat entlang der Linie A-B in Fig. 2.

In Fig. 1 ist der gesamte Implantatkörper des Standes der Technik allgemein mit 10 bezeichnet. Dieser wird in den Kieferknochen 17 hineingedreht, wobei die Gingiva bzw. das Zahnfleisch 13 über dem Kieferknochen 17 liegt, welches direkt am unteren Teil der Keramikkrone 6 anliegt. Anders gesagt: der Kronenrand 20b der Metallkrone 20a ragt tangential in die Gingiva 13 hinein. Mit dem Bezugszeichen 5 ist der Pfosten bezeichnet, der über den Implantatshals 19 zum konisch ausgebildeten Kern führt, welcher ein stumpfes Gewinde 15 im oberen Bereich und ein scharfes Gewinde 16 im unteren Bereich aufweist. Das stumpfe Gewinde 15 verletzt beim Einschrauben den Kieferknochen in nicht unbeträchtlicher Weise.

Demgegenüber zeigen die Fig. 2 und 3 einen erfindungsgemäßen Aufbau des einschraubbaren, selbstschneidenden Knochenimplantates 19, dessen Implantatskörper allgemein mit 10 bezeichnet ist, der aus Titan besteht und mit Quarz gestrahlt wurde, um dessen Oberfläche zu vergrößern. Deutlich ist zu sehen, daß der Kern dieses Implantatkörpers 10 keinen konischen, sondern einen zylindrischen Aufbau aufweist. Auch der Pfosten 5 im oberen Bereich ist mit Quarz gestrahlt und besitzt einen Durchmesser, der 0,03-0,06 mm kleiner ist als der Durchmesser des Implantatshalses 19. Der Kronenrand 20b sitzt somit um etwa 0,03-0,06 mm nach innen versetzt bündig auf dem Implantatshals 19. Durch diese neue Anordnung wird die Gingiva 13 nicht mehr durch die Krone 20a unmittelbar berührt und geht deshalb nicht mehr zurück. Der Rücksprung gegenüber dem Implantatshals 19 ist allgemein mit 4 angedeutet. Die Krone 20a ist mit Keramik 6 überzogen, wobei Befestigungszement zwischen Krone 20a und Pfosten 5 vorgesehen ist. Die Einschraubkammer 7 für den Pfosten 5 weisen ein Innengewinde auf. Die kleinen Dellen, die durch die Oberflächenbehandlung mit Quarz hervorgerufen sind, sind mit 14 bezeichnet. Das scharfe Gewinde 16 ist wie erwähnt nicht konisch, sondern durchgehend zylindrisch, so daß Verletzungen des Gewebes oder des Kieferknochens 17 nicht mehr zu befürchten sind. Die Spankammern 18 dienen dem Knochenabrieb und verlaufen spiralförmig, so daß ein einfaches Absaugen des Abriebmaterials im oberen Bereich ermöglicht wird.

## Patentansprüche

1. Einschraubbares, selbstschneidendes Knochenimplantat (10) zur Pfostenverankerung von zahnärztlichen Suprakonstruktionen, das aus einem zylindrischen Pfostenlager (12) mit einstückig angesetzem Kern eines selbstschneidenden scharfgängigen Gewindes (16) besteht, dadurch gekennzeichnet, daß es aus reinem Titan (99,9%) besteht, welches zur Vergrößerung seiner Oberfläche eine Vielzahl mikroskopischer Dellen (14) durch ausschließliche Bestrahlung mit Quarz aufweist, und daß mehrere spiralförmig aufsteigende Kanäle (18) zur Aufnahme von Knochenpartikeln und Spänen um die Oberfläche des zylindrischen Kerns (14) herum vorgesehen sind, und daß der Durchmesser des Pfostens (5) um 0,02-0.06 mm kleiner als der Durchmesser des Implantatshalses (19) ist, so daß im eingesetzten Gebrauchszustand die Krone bündig mit dem Implantatshals (19) ist.

2. Knochenimplantat nach Anspruch 1, dadurch gekennzeichnet, daß mehrere Tausend Dellen zu einer etwa sechsfachen Vergrößerung der Oberfläche des Implantates führen.

3. Knochenimplantat nach Anspruch 1 und 2, dadurch gekennzeichnet, daß drei oder vier spiralförmige Kanäle oder Spankammern von der Spitze bis zum Hals aufsteigend vorgesehen sind.

4. Knochenimplantat nach Anspruch 1 bis 3, dadurch gekennzeichnet, daß der Durchmesser des Pfostens um 0,03 mm kleiner ist als der Durchmesser des Implantatshalses.

5. Knochenimplantat nach Anspruch 1 bis 4, gekennzeichnet durch Bestrahlung mit Quarz von hoher Geschwindigkeit.

6. Knochenimplantat nach Anspruch 1 bis 5, dadurch gekennzeichnet, daß der Pfostenkörper zur Verankerung der Krone (20) mittels Befestigungszement quarzbestrahlt ist.
